# EUROPEAN PATENT APPLICATION

(11) **EP 4 597 650 A1**
(43) Date of publication of application: **06.08.2025**
(21) Application number: 23871560.1
(22) Date of filing: 18.08.2023
(51) Int. Cl.: H01M 8/18, H01M 8/02, H01M 8/0221, H01M 8/0258, H01M 8/2483

(54) **CELL FRAME STRUCTURE, CELL STACK, AND REDOX FLOW BATTERY SYSTEM**

(30) Priority: 28.09.2022 JP 2022155357
(71) Applicant: SUMITOMO ELECTRIC INDUSTRIES, LTD., Osaka-shi, Osaka 541-0041 (JP)
(72) Inventor: ITO, Takefumi, Osaka-shi, Osaka 541-0041 (JP); MOTOI, Kenji, Osaka-shi, Osaka 541-0041 (JP)
(74) Representative: Müller-Boré & Partner Patentanwälte PartG mbB
(86) International application number: PCT/JP2023/029887
(87) International publication number: WO 2024/070318

(57) **Abstract**

A cell frame structure includes a bipolar plate, a frame body provided around an outer periphery of the bipolar plate, and a first member overlaid on the frame body, and the frame body and the first member are fixed by a joint portion.

## Description

### TECHNICAL FIELD

The present disclosure relates to a cell frame structure, a cell stack, and a redox flow battery system. The present application claims priority to Japanese Patent Application No. 2022-155357 filed on September 28, 2022, the entire contents of which are herein incorporated by reference.

### BACKGROUND ART

A redox flow battery in PTL 1 includes a cell stack including a layered body in which a cell frame, an electrode, a protection plate, a membrane, a protection plate, and an electrode are layered in this order a plurality of times. The cell frame includes a bipolar plate and a frame body provided around an outer periphery of the bipolar plate. The frame body includes a manifold and a flow channel. The manifold and the flow channel are each a flow path for an electrolyte. The manifold passes through the frame body. The flow channel connects the manifold and an inner peripheral portion of the frame body to each other. A recess is defined by an inner peripheral surface of the frame body and a surface of the bipolar plate. The electrode is arranged in this recess. The protection plate is arranged between the frame body and the membrane. The protection plate is arranged on a surface of the frame body as covering the flow channel in the frame body.

### CITATION LIST

### PATENT LITERATURE

PTL 1: WO2017/134780

### SUMMARY OF INVENTION

A cell frame structure in the present disclosure includes a bipolar plate, a frame body provided around an outer periphery of the bipolar plate, and a first member overlaid on the frame body, and the frame body and the first member are fixed by a joint portion.

### BRIEF DESCRIPTION OF DRAWINGS

Fig. 1 is a schematic plan view of a cell frame structure in a first embodiment.
Fig. 2 is a cross-sectional view along II-II in Fig. 1.
Fig. 3 is a schematic cross-sectional view of another exemplary cell frame structure in the first embodiment.
Fig. 4 is a schematic cross-sectional view of another exemplary cell frame structure in the first embodiment.
Fig. 5 is a schematic enlarged view of an area A in Fig. 2.
Fig. 6 is a schematic diagram of a construction of a redox flow battery system and a cell stack in the first embodiment.
Fig. 7 is a schematic plan view of a cell frame structure in a second embodiment.
Fig. 8 is a schematic plan view of a cell frame structure in a third embodiment.
Fig. 9 is a schematic plan view of a cell frame structure in a fourth embodiment.

### DETAILED DESCRIPTION

### [Problem to be Solved by the Present Disclosure]

In assembly of the layered body, normally, each member of the layered body is successively laid flat. In PTL 1, the frame body of the cell frame and a first member which is the protection plate are not fixed. In flat laying, even when positions of members are aligned, the members may rub against each other, which may result in position displacement of the first member. The position of the first member may be displaced due to thermal expansion or thermal shrinkage of the members due to energization of a redox flow battery or fluid passage. Position displacement of the first member may lead to contact of the inner peripheral portion of the frame body or an opening edge portion of the flow channel in the frame body with the membrane. As a result of this contact, the membrane may be damaged.

One of objects of the present disclosure is to provide a cell frame structure in which position displacement of a frame body and a first member is less likely.

### [Effects of the Present Disclosure]

The cell frame structure in the present disclosure is less likely to suffer from position displacement of the frame body and the first member.

### <<Description of Embodiments in the Present Disclosure>>

Embodiments in the present disclosure will initially be listed and described.
(1) A cell frame structure in one manner of the present disclosure includes a bipolar plate, a frame body provided around an outer periphery of the bipolar plate, and a first member overlaid on the frame body, and the frame body and the first member are fixed by a joint portion.
   In the cell frame structure, since the frame body and the first member are fixed by the joint portion, position displacement of the frame body and the first member is less likely. Therefore, the cell frame structure can construct a cell stack in which contact between an edge portion of the frame body which will be described later and a membrane which will be described later is readily suppressed. Accordingly, the cell frame structure can construct the cell stack in which damage to the membrane due to contact is readily suppressed.
(2) In the cell frame structure in (1), the joint portion may include a fused portion of the frame body and the first member.
   The fused portion can be formed from a constituent material for the frame body and a constituent material for the first member. Therefore, the construction can form the joint portion only from the frame body and the first member, unlike a bonded portion and a mechanically coupled portion which will be described later. In addition, in the construction, the joint portion is resistant against an electrolyte.
(3) In the cell frame structure in (1) or (2), the joint portion may include a bonded portion of the frame body and the first member.
   The bonded portion can be formed from the frame body and the first member with the use of an adhesive. Therefore, in the construction, unlike the fused portion, the joint portion can be formed without the frame body and the first member being molten.
(4) **In** the cell frame structure in any one of (1) to (3), the joint portion may include a mechanically coupled portion of the frame body and the first member.
   As will be described in detail later, the mechanically coupled portion can be formed by mechanically coupling the frame body and the first member to each other by mainly using a member different from the frame body and the first member. Therefore, in the construction, unlike the fused portion, the joint portion can be formed without the frame body and the first member being molten.
(5) **In** the cell frame structure in any one of (1) to (4), the first member may have a surrounding shape in a plan view and the first member may cover an inner peripheral portion of the frame body over the entire periphery.
   The construction can construct a cell stack in which contact between the inner peripheral portion and the membrane is readily suppressed over the entire periphery of the frame body.
(6) In the cell frame structure in (5), the joint portion may be provided in a surrounding manner along the entire periphery of the first member.
   The joint portion can perform a function as a seal that suppresses leakage of an electrolyte from between the frame body and the first member. Therefore, the construction can construct a cell stack in which the electrolyte is less likely to leak from between the frame body and the first member.
(7) In the cell frame structure in any one of (1) to (4), the frame body may be in a shape of a rectangular frame, the frame body may include long-side portions opposed to each other and short-side portions opposed to each other, each long-side portion of the long-side portions may include a manifold that passes through the long-side portion and a groove portion that connects the manifold and an inner edge portion of the long-side portion to each other, and the first member may include a first piece that covers an opening edge portion of the groove portion in each of the long-side portions.
   The construction can construct a cell stack in which contact between the opening edge portion and the membrane is readily suppressed. In addition, the construction can reduce a constituent material for the first member as compared with the first member in the surrounding shape described above.
(8) In the cell frame structure in (7), the first member may further include a second piece that covers an inner edge portion of each of the short-side portions.
   The construction can construct a cell stack in which contact between the inner edge portion and the membrane is readily suppressed.
(9) In the cell frame structure in any one of (1) to (6), the frame body may be in a shape of a rectangular frame, the frame body may include long-side portions opposed to each other and short-side portions opposed to each other, each long-side portion of the long-side portions may include a manifold that passes through the long-side portion and a groove portion that connects the manifold and an inner edge portion of the long-side portion to each other, and the joint portion may be provided to surround the groove portion in each of the long-side portions.
   The construction can construct a cell stack in which contact between the opening edge portion and the membrane is readily suppressed. In addition, the construction can construct the cell stack in which leakage of an electrolyte from between the frame body and the first member is less likely.
(10) In the cell frame structure in (7) or (8), the joint portion may be provided between the groove portion and an outer edge portion of the long-side portion, the groove portion and the joint portion may extend along the long-side portions from a first one of the short-side portions toward a second one of the short-side portions, and the joint portion may be provided to a position closer to the first one of the short-side portions than the groove portion and provided to a position closer to the second one of the short-side portions than the groove portion.
   The construction can construct a cell stack in which leakage of an electrolyte from between the frame body and the first member is less likely.
(11) In the cell frame structure in any one of (1) to (10), a thickness of the first member may be at least 1/20 time and at most 1/5 time as large as a thickness of the frame body.
   The first member having the thickness at least 1/20 time as large as the thickness of the frame body is excellent in mechanical strength. Therefore, the construction can suppress damage to the first member. The first member having the thickness at most 1/5 time as large as the thickness of the frame body is not excessive in rigidity. Therefore, the construction can suppress damage to the membrane due to contact between the first member and the membrane. In addition, in the construction, the thickness of the first member is at most 1/5 time as large as the thickness of the frame body, and hence the construction can contribute to reduction in size of a cell stack.
(12) In the cell frame structure in any one of (1) to (11), a strength of joint between the frame body and the first member may be not lower than 0.2 MPa.
   When the strength of joint is not lower than 0.2 MPa, position displacement from the frame body due to a fluid pressure of an electrolyte is less likely. In addition, when the strength of joint is not lower than 0.2 MPa, a function of the joint portion to seal the electrolyte is readily maintained.
(13) In the cell frame structure in any one of (1) to (12), a constituent material for the frame body and the first member may be resin.
   Resin has resistance against an electrolyte and electrical insulation.
(14) In the cell frame structure in any one of (1) to (13), a constituent material for the frame body and the first member may be one selected from the group consisting of vinyl chloride resin, polypropylene resin, polyethylene resin, fluorine resin, epoxy resin, acrylonitrile-butadiene-styrene resin, vinylidene chloride resin, polyamide resin, polyester resin, polystyrene resin, acrylic resin, polyvinyl alcohol resin, diacetate resin, triacetate resin, and polycarbonate resin.
   The constituent materials are excellent in resistance against an electrolyte and electrical insulation. The constituent materials are readily and inexpensively available.
(15) In the cell frame structure in any one of (1) to (14), a difference between a solubility parameter of a constituent material for the frame body and a solubility parameter of a constituent material for the first member may be not larger than fifteen.
   Since the construction is excellent in conformability between the frame body and the first member, it readily construct the joint portion which is particularly secure.
(16) A cell stack in one manner of the present disclosure includes the cell frame structure according to any one of (1) to (15).
   The cell stack includes the cell frame structure and therefore it readily suppresses damage to the membrane due to contact between the frame body and the first member.
(17) A redox flow battery system in one manner of the present disclosure includes the cell stack in (16).
   Since the redox flow battery system includes the cell stack in which damage to the membrane due to contact between the frame body and the first member is readily suppressed, it readily suppresses mixing of a positive electrolyte and a negative electrolyte with each other. Therefore, the redox flow battery system readily suppresses lowering in current efficiency.

### <<Details of Embodiments in the Present Disclosure>>

Details of the cell frame structure, the cell stack, and the redox flow battery system in the present disclosure will be described below. The same reference character in the drawings represents objects with the same name. A size or the like of a member shown in each figure is expressed for the purpose of clarification of description and does not necessarily represent actual dimensional relation or the like.

### <<First Embodiment>>

### [Cell Frame Structure]

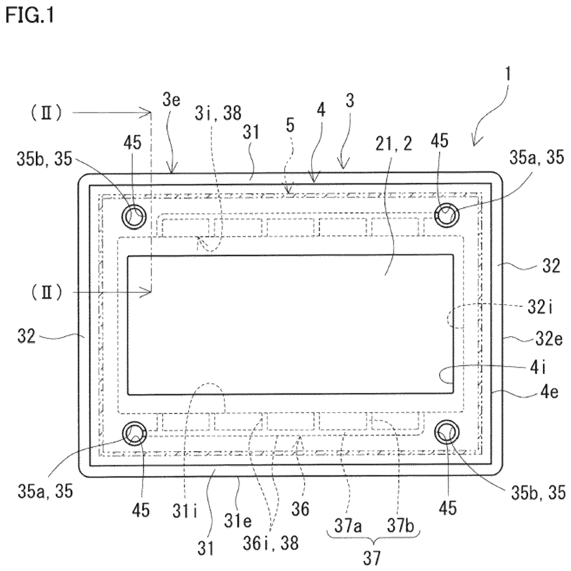

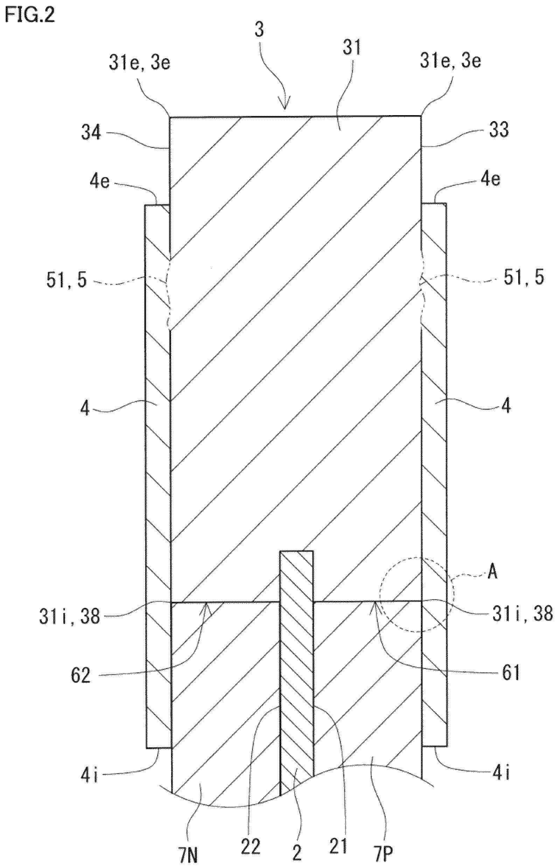

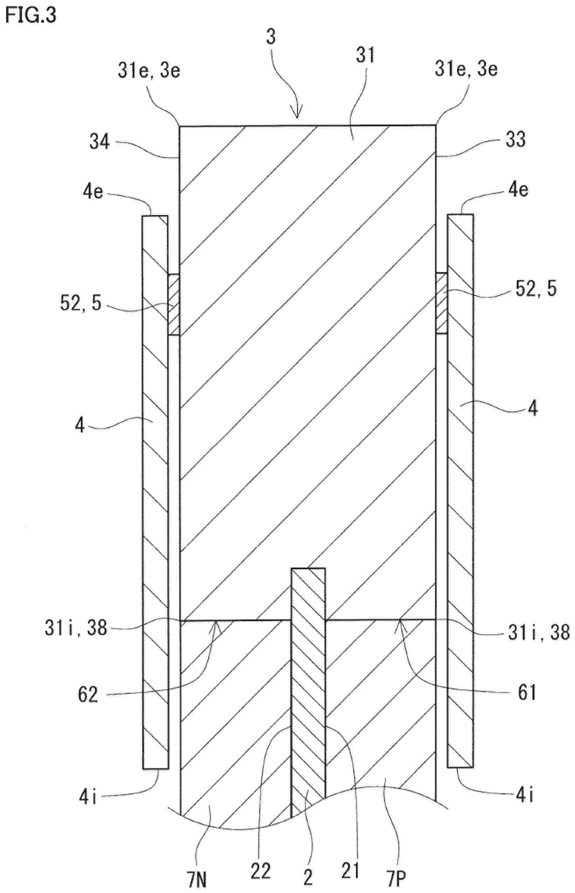

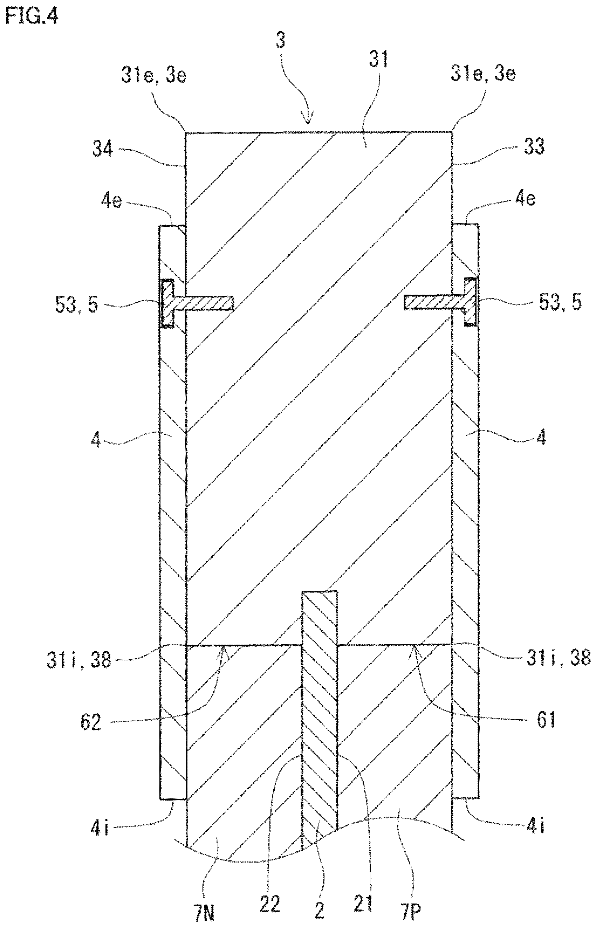

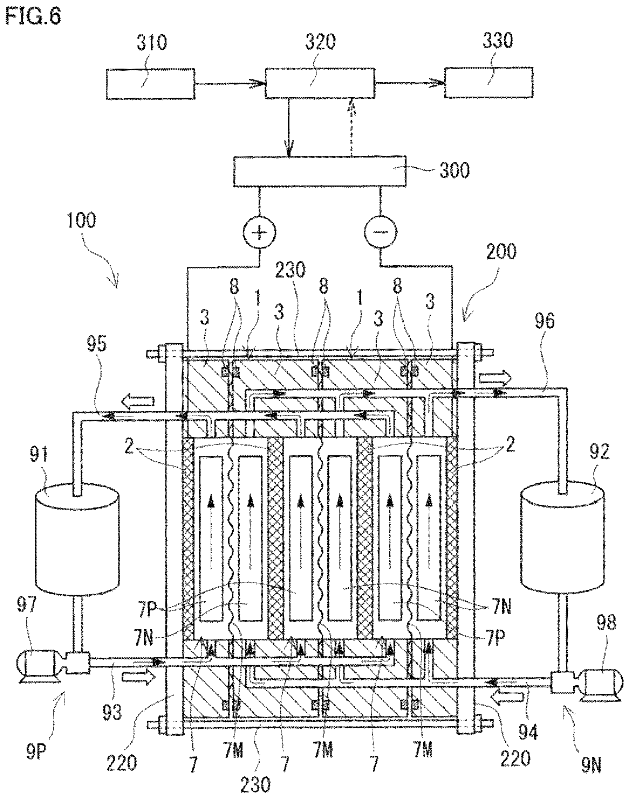

A cell frame structure 1 in a first embodiment will be described with reference to Figs. 1 to 5. Figs. 2 to 4 show an assembly in which a positive electrode 7P is arranged between a first recess 61 and a first member 4 of cell frame structure 1 and a negative electrode 7N is arranged between a second recess 62 and first member 4 of cell frame structure 1 for the sake of convenience of description. Figs. 3 and 4 are cross-sectional views showing a state of cell frame structure 1 cut at a position as in a cross-sectional view shown in Fig. 2. Cell frame structure 1 includes a bipolar plate 2, a frame body 3, and first member 4. Frame body 3 is provided around an outer periphery of bipolar plate 2. Frame body 3 includes an edge portion 38. First member 4 is overlaid on frame body 3 to cover edge portion 38. Cell frame structure 1 is a member that forms a cell stack 200 included in a redox flow battery system 100 which will be described later with reference to Fig. 6. Fig. 6 does not show first member 4 for the sake of convenience of description. One of features of cell frame structure 1 resides in that frame body 3 and first member 4 are fixed by a joint portion 5 as shown in Figs. 1 to 4.

### [Bipolar Plate]

Bipolar plate 2 shown in Fig. 1 serves as a partition between adjacent battery cells 7 in cell stack 200 shown in Fig. 6. Cell stack 200 and battery cell 7 will be described later. As shown in Fig. 2, bipolar plate 2 is provided with a first surface 21 opposed to positive electrode 7P and a second surface 22 opposed to negative electrode 7N. Bipolar plate 2 in the present embodiment has a rectangular shape in a plan view. The plan view refers to a view of bipolar plate 2 which is an object of interest from a direction along a thickness of the object. The thickness of bipolar plate 2 is a length between first surface 21 and second surface 22. The meaning of the plan view hereinafter is similar to the meaning as explained for the plan view of bipolar plate 2. A known bipolar plate can be employed as bipolar plate 2.

### [Frame Body]

Frame body 3 shown in Fig. 1 defines an area to be battery cell 7, in the inside of cell stack 200 shown in Fig. 6. As shown in Fig. 2, frame body 3 and bipolar plate 2 are integrated. Frame body 3 is formed, for example, by injection molding around a peripheral portion of bipolar plate 2. Frame body 3 is provided with an opening through which bipolar plate 2 is exposed. As shown in Fig. 2, first recess 61 is defined by an inner peripheral surface of frame body 3 and first surface 21 of bipolar plate 2. Positive electrode 7P is arranged in first recess 61. Second recess 62 is defined by the inner peripheral surface of frame body 3 and second surface 22 of bipolar plate 2. Negative electrode 7N is arranged in second recess 62.

An outer peripheral portion 3e and an inner peripheral portion 3i of frame body 3 are in a shape capable of surrounding an outer periphery of bipolar plate 2. Frame body 3 in the present embodiment is in a shape of a rectangular frame in the plan view. A shape of an opening of each of first recess 61 and second recess 62 in the present embodiment is rectangular. A shape of positive electrode 7P arranged in first recess 61 and a shape of negative electrode 7N arranged in second recess 62 in the plan view are also rectangular. Frame body 3 in the present embodiment includes two long-side portions 31 and two short-side portions 32. Two long-side portions 31 are opposed to each other. Two short-side portions 32 are opposed to each other.

Frame body 3 includes a plurality of manifolds 35 and a plurality of groove portions 36. Each manifold 35 and each groove portion 36 are flow paths for an electrolyte. Each manifold 35 passes through a first surface 33 and a second surface 34 of frame body 3. Each groove portion 36 is provided in first surface 33 and second surface 34 of frame body 3. In Fig. 1, first surface 33 is a surface in front and second surface 34 is a surface in the rear.

In the present embodiment, manifold 35 and groove portion 36 are provided in each long-side portion 31. Manifold 35 and groove portion 36 are not provided in each short-side portion 32. Each manifold 35 passes through first surface 33 and second surface 34 of long-side portion 31. The number of manifolds 35 provided in each long-side portion 31 is not particularly limited but can be selected as appropriate. Fig. 1 shows an example in which two manifolds 35 are provided in each long-side portion 31.

Groove portion 36 is provided in first surface 33 and second surface 34 of each long-side portion 31. Groove portion 36 in first surface 33 of each long-side portion 31 is connected to a first manifold 35a and an inner edge portion 31i of each long-side portion 31 and not connected to a second manifold 35b. In long-side portion 31 on a lower side in Fig. 1, left manifold 35 is first manifold 35a and right manifold 35 is second manifold 35b. In long-side portion 31 on an upper side in Fig. 1, right manifold 35 is first manifold 35a and left manifold 35 is second manifold 35b. Though not shown, the groove portion in second surface 34 of each long-side portion 31 is not connected to first manifold 35a but connected to second manifold 35b and inner edge portion 31i of long-side portion 31. Groove portion 36 in first surface 33 and the groove portion in second surface 34 of each long-side portion 31 are the same in construction. Description below will representatively be given for groove portion 36 in first surface 33 of each long-side portion 31.

Each groove portion 36 includes a guide groove portion 37. Each guide groove portion 37 connects first manifold 35a and inner peripheral portion 3i of frame body 3 to each other. **In** the present embodiment, each guide groove portion 37 connects first manifold 35a and inner edge portion 31i of each long-side portion 31 to each other. Each guide groove portion 37 guides the electrolyte from first manifold 35a toward inner edge portion 31i or from inner edge portion 31i toward first manifold 35a. A known guide groove portion can be adopted as each guide groove portion 37. Each guide groove portion 37 shown in Fig. 1 is illustrative and not limited to a layout shown in Fig. 1. Each guide groove portion 37 in Fig. 1 is composed of a single first guide groove portion 37a and six second guide groove portions 37b. First guide groove portion 37a is a groove linearly extending from first manifold 35a toward second manifold 35b, to a position around second manifold 35b. Second guide groove portion 37b is a groove linearly extending from first guide groove portion 37a toward inner edge portion 31i of long-side portion 31. Each second guide groove portion 37b connects first guide groove portion 37a and inner edge portion 31i of each long-side portion 31 to each other. Each groove portion 36 may further include a rectification portion which is not shown. Each rectification portion diffuses or concentrates the electrolyte. Each rectification portion is formed over the entire length of inner edge portion 31i of each long-side portion 31. A known rectification portion can be adopted as each rectification portion. In an example where the rectification portion is provided, each guide groove portion 37 connects first manifold 35a and the rectification portion to each other.

When the electrolyte flows from long-side portion 31 on the lower side in Fig. 1 toward long-side portion 31 on the upper side, a flow of the electrolyte over first surface 33 of each long-side portion 31 is as below. The electrolyte that has passed through first manifold 35a of long-side portion 31 on the lower side flows through guide groove portion 37 in long-side portion 31 on the lower side to inner edge portion 31i of long-side portion 31 on the lower side. The electrolyte that has flowed to inner edge portion 31i of long-side portion 31 on the lower side flows to positive electrode 7P shown in Fig. 2. The electrolyte that has flowed to positive electrode 7P sequentially flows to inner edge portion 31i of long-side portion 31 on the upper side and guide groove portion 37 of long-side portion 31 on the upper side in Fig. 1. The electrolyte that has flowed through guide groove portion 37 in long-side portion 31 on the upper side flows to first manifold 35a in long-side portion 31 on the upper side. In the example where the rectification portion is provided, the electrolyte that has flowed to the rectification portion in long-side portion 31 on the lower side diffuses over the entire length of inner edge portion 31i and flows to positive electrode 7P. As a result of diffusion of the electrolyte, the electrolyte tends to spread over the entire area in a direction along a long side of positive electrode 7P. The electrolyte that has flowed to positive electrode 7P is concentrated by the rectification portion of long-side portion 31 on the upper side and flows to guide groove portion 37 in long-side portion 31 on the upper side.

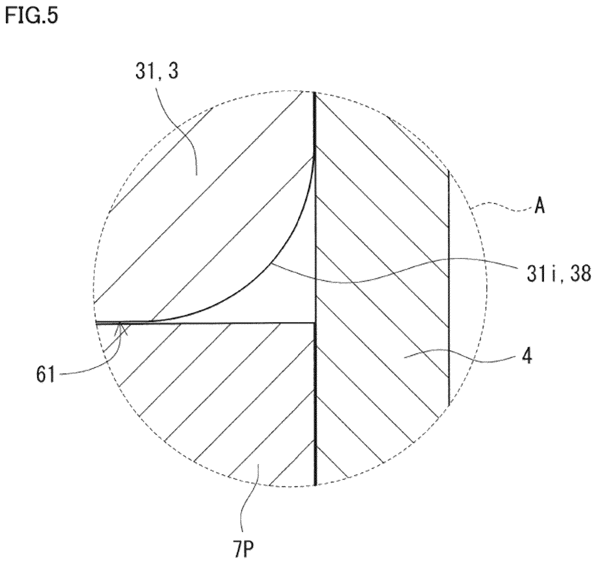

Frame body 3 is provided with edge portion 38. Edge portion 38 includes inner peripheral portion 3i of frame body 3 and an opening edge portion 36i of groove portion 36. For the sake of convenience of description, a cross-sectional shape of inner peripheral portion 3i in Figs. 2 to 4 is shown at a right angle. The cross-sectional shape of inner peripheral portion 3i may be an arc shape as in Fig. 5 which shows an area A in Fig. 2 as being enlarged. A bending radius of edge portion 38 may be, for example, not larger than the thickness of frame body 3. The bending radius of edge portion 38 may be, for example, not larger than 1 mm, not larger than 0.8 mm, or not larger than 0.5 mm.

The thickness of frame body 3 may be, for example, not smaller than 2 mm and not larger than 20 mm. The thickness of frame body 3 is a length between first surface 33 and second surface 34. Frame body 3 having the thickness not smaller than 2 mm is excellent in mechanical strength. Frame body 3 having the thickness not larger than 20 mm can contribute to reduction in size of cell stack 200. The thickness of frame body 3 may further be not smaller than 3 mm and not larger than 15 mm and particularly not smaller than 5 mm and not larger than 10 mm.

A constituent material for frame body 3 is a material excellent in resistance against the electrolyte and a material that satisfies electrical insulation and mechanical characteristics. The constituent material for frame body 3 may be, for example, resin. The constituent material for frame body 3 may be, for example, one selected from the group consisting of vinyl chloride resin, polypropylene resin, polyethylene resin, fluorine resin, epoxy resin, acrylonitrile-butadiene-styrene resin, vinylidene chloride resin, polyamide resin, polyester resin, polystyrene resin, acrylic resin, polyvinyl alcohol resin, diacetate resin, triacetate resin, and polycarbonate resin. These resins are excellent in resistance against the electrolyte and electrical insulation. These resins are readily and inexpensively available.

### [First Member]

First member 4 prevents contact between edge portion 38 of frame body 3 and a membrane 7M shown in Fig. 6. Membrane 7M will be described later. Prevention of this contact suppresses damage to membrane 7M due to contact between edge portion 38 and membrane 7M. As shown in Fig. 2, first member 4 is overlaid on each of first surface 33 and second surface 34 of frame body 3. Frame body 3 and each first member 4 are fixed by joint portion 5 which will be described later. In other words, frame body 3 and both of first members 4 are an integrated article. First member 4 overlaid on first surface 33 of frame body 3 and first member 4 overlaid on second surface 34 are identical members. Each first member 4 in the present embodiment is a flat plate material uniform in thickness. As each first member 4 is formed from the flat plate material, each first member 4 can be layered on frame body 3 in a stable manner in formation of joint portion 5. Unlike the present embodiment, both of first members 4 may be plate materials not uniform in thickness having an oval or semicircular cross-sectional shape or a rod material. Description below will representatively be given for first member 4 overlaid on first surface 33 of frame body 3.

The shape of first member 4 is not particularly limited but can be selected as appropriate. The shape of first member 4 in the present embodiment in the plan view is in a shape of a rectangular frame as shown in Fig. 1. A length of a long side of an outer peripheral portion 4e of first member 4 is longer than a length of a long side of inner peripheral portion 3i and shorter than a length of a long side of outer peripheral portion 3e. A length of a long side of an inner peripheral portion 4i of first member 4 is shorter than the length of the long side of inner peripheral portion 3i. A length of a short side of outer peripheral portion 4e of first member 4 is longer than a length of a short side of inner peripheral portion 3i and shorter than a length of a short side of outer peripheral portion 3e. A length of a short side of inner peripheral portion 4i of first member 4 is shorter than the length of the short side of inner peripheral portion 3i.

In the present embodiment, first member 4 is arranged to cover the entirety of inner peripheral portion 3i and groove portion 36 of frame body 3. First member 4 is arranged to lie over inner peripheral portion 3i. Since an opening of groove portion 36 is closed by first member 4, a flow path for the electrolyte is defined by first member 4 and groove portion 36. Inner peripheral portion 4i of first member 4 is located on an inner side of inner peripheral portion 3i of frame body 3. In other words, first member 4 has inner peripheral portion 4i projecting from inner peripheral portion 3i toward positive electrode 7P. A portion of first member 4 located on the inner side of inner peripheral portion 3i of frame body 3, that is, a second portion of first member 4 which will be described later, presses positive electrode 7P as shown in Fig. 2. Outer peripheral portion 4e of first member 4 in the shape of the rectangular frame is located on the inner side of outer peripheral portion 3e of frame body 3.

First member 4 includes a first portion, the second portion, and a third portion. The first portion is a portion overlaid on first surface 33 of frame body 3 (Figs. 2 to 4). The first portion includes a portion overlaid on groove portion 36 shown in Fig. 1. Since the first portion covers opening edge portion 36i of groove portion 36, contact between opening edge portion 36i and membrane 7M is suppressed. A part of the first portion forms joint portion 5. In an example where joint portion 5 is implemented by a fused portion 51 which will be described later with reference to Fig. 2 or a coupled portion 53 which will be described later with reference to Fig. 4, the first portion and first surface 33 are in contact with each other. In an example where joint portion 5 is implemented by a bonded portion 52 which will be described later with reference to Fig. 3, the first portion and first surface 33 are not in contact with each other but a gap is provided between the first portion and first surface 33. The second portion is a portion not overlaid on frame body 3 but overlaid on bipolar plate 2 (Figs. 2 to 4). The second portion is not in contact with bipolar plate 2. A space where positive electrode 7P is arranged is provided between the second portion, first surface 21 of bipolar plate 2, and the inner peripheral surface of frame body 3. Positive electrode 7P is arranged in this space. The third portion is a portion between the first portion and the second portion. The third portion is a portion overlaid on inner peripheral portion 3i of frame body 3, that is, inner edge portion 31i here (Figs. 2 to 5). In an example where inner peripheral portion 3i is formed in an arc shape as shown in Fig. 5, the third portion is an area of first member 4 that is opposed to inner peripheral portion 3i in the arc shape. The third portion suppresses contact between inner peripheral portion 3i and membrane 7M.

The first portion of first member 4 is provided with a through hole 45 corresponding to a diameter of manifold 35 at a position corresponding to manifold 35. Though Fig. 1 shows through hole 45 in first member 4 as being larger than manifold 35 for the sake of convenience of description, they are actually the same in size.

The constituent material for first member 4 is a material excellent in resistance against the electrolyte and a material that satisfies electrical insulation and mechanical characteristics. The constituent material for first member 4 may be, for example, resin. The constituent material for first member 4 may be, for example, one selected from the group of resins described in connection with the constituent material for frame body 3. The constituent material for first member 4 may be the same as or different from the constituent material for frame body 3. A difference between a solubility parameter of the constituent material for first member 4 and a solubility parameter of the constituent material for frame body 3 may be, for example, not larger than fifteen. When the difference in solubility parameter is not larger than fifteen, conformability between first member 4 and frame body 3 is excellent and construction of particularly secure fused portion 51 is likely.

The solubility parameter can be obtained, for example, with turbidimetric titration. Turbidimetric titration refers to a method of titration by making use of the fact that a resin solution becomes cloudy when a poor solvent is kept added thereto. Specifically, the solubility parameter can be obtained by titration in accordance with a procedure below, with the use of computation software. By adding 99 g of acetone to 1.0 g of a resin sample, 1.0 mass % of an acetone solution is made. Ten grams of the acetone solution is prepared and stirred. Water is dropped into the acetone solution that is being stirred. When cloudiness still remains at a time point of lapse of thirty seconds while water is kept dropped, the time point of lapse of thirty seconds is defined as an end point. Ten grams of the acetone solution is again prepared and stirred. n-hexane is dropped into the acetone solution that is being stirred. When cloudiness still remains at a time point of lapse of thirty seconds while n-hexane is kept dropped, the time point of lapse of thirty seconds is defined as an end point. Masses of the resin sample, acetone, and the acetone solution and amounts of drop of water and n-hexane are inputted to the computation software. The computation software is "solubility parameter" made by IT-Alia, Inc. A value computed by the computation software is the solubility parameter of the resin sample. The solubility parameter of each of the constituent material for first member 4 and the constituent material for frame body 3 is obtained by employing the resin sample as the constituent material for first member 4 and the constituent material for frame body 3.

The thickness of first member 4 may be, for example, at least 1/20 time and at most 1/5 time as large as the thickness of frame body 3. First member 4 having the thickness at least 1/20 time as large as the thickness of frame body 3 is higher in mechanical strength than the first member having the thickness less than 1/20 time as large as the thickness of frame body 3. Therefore, in construction of cell stack 200, damage to first member 4 due to a pressure with which cell stack 200 is fastened is suppressed. Therefore, first member 4 readily suppresses contact between edge portion 38 and membrane 7M. First member 4 having the thickness at most 1/5 time as large as the thickness of frame body 3 is lower in rigidity than the first member having the thickness more than 1/5 time as large as the thickness of frame body 3. Therefore, damage to membrane 7M due to contact with membrane 7M is readily suppressed. In addition, first member 4 having the thickness at most 1/5 time as large as the thickness of frame body 3 can contribute to reduction in size of cell stack 200. The thickness of first member 4 may further be at least 1/15 time and at most 1/6 time as large as the thickness of frame body 3 and particularly at least 1/10 time and at most 1/8 time as large as the thickness of frame body 3. The thickness of first member 4 is a maximum length between the first surface and the second surface of first member 4. The first surface of first member 4 is a surface proximal to first surface 33 of frame body 3. The second surface of first member 4 is a surface distal to first surface 33.

Strength of joint between frame body 3 and first member 4 may be, for example, not lower than a fluid pressure of the electrolyte. Strength of joint is maximum stress in peeling first member 4 off from frame body 3. When the strength of joint is not lower than the fluid pressure, position displacement of frame body 3 and first member 4 due to the fluid pressure is less likely. In addition, when the strength of joint is not lower than the fluid pressure, the function to seal the electrolyte performed by joint portion 5 which will be described later tends to be maintained. The fluid pressure is, for example, lower than 0.2 MPa. In other words, the strength of joint may be not lower than 0.2 MPa. The strength of joint may be not lower than 0.5 MPa, not lower than 0.8 MPa, not lower than 1 MPa, or not lower than 3 MPa. The strength of joint may be, for example, not higher than 10 MPa. In other words, the strength of joint of first member 4 may be not lower than 0.2 MPa and not higher than 10 MPa, furthermore not lower than 1 MPa and not higher than 5 MPa, or particularly not lower than 1 MPa and not higher than 3 MPa or not lower than 1 MPa and not higher than 2 MPa.

### [Joint Portion]

Joint portion 5 fixes frame body 3 and first member 4. As a result of this fixing, frame body 3 and first member 4 are integrated. As a result of this integration, position displacement of frame body 3 and first member 4 is suppressed. Therefore, in making cell stack 200, position displacement of frame body 3 and first member 4 is less likely. In making cell stack 200, the assembly described above and membrane 7M are layered in this order a plurality of times. Since position displacement of frame body 3 and first member 4 is less likely, contact between edge portion 38 of frame body 3 and membrane 7M is suppressed and hence damage to membrane 7M due to contact between edge portion 38 and membrane 7M is suppressed. Position displacement of first member 4 due to thermal expansion or thermal shrinkage of a member due to energization of redox flow battery system 100 or fluid passage is also readily suppressed.

Joint portion 5 includes at least one of fused portion 51 of frame body 3 and first member 4 as shown in Fig. 2, bonded portion 52 of frame body 3 and first member 4 as shown in Fig. 3, and mechanically coupled portion 53 of frame body 3 and first member 4 as shown in Fig. 4. Fused portion 51 and bonded portion 52 more readily fix frame body 3 and first member 4 over a wide range than coupled portion 53.
Fused portion 51 and bonded portion 52 more readily suppress leakage of the electrolyte from between frame body 3 and first member 4 than mechanically coupled portion 53.

As shown in Fig. 2, fused portion 51 is obtained by fusion of the constituent material for frame body 3 and the constituent material for first member 4. Fusion refers to mixing of the constituent material for frame body 3 and the constituent material for first member 4 with each other or the constituent materials being dissolved in each other. Therefore, fused portion 51 can form joint portion 5 only from frame body 3 and first member 4, unlike bonded portion 52 and mechanically coupled portion 53. In addition, joint portion 5 is resistant against the electrolyte. Fused portion 51 can be formed, for example, by welding or fusion. Exemplary welding includes ultrasonic welding, high-frequency dielectric heating welding, induction welding, laser welding, or friction welding. In induction welding, an inductively heated metallic wire is arranged between frame body 3 and first member 4. In this case, in forming fused portion 51, the metallic wire remains between frame body 3 and first member 4. Exemplary fusion is flat fusion. Fused portion 51 can also be formed from at least one of a part of frame body 3 and a part of first member 4 dissolved by a solvent. Fused portion 51 can also be formed by sending hot air to at least one of frame body 3 and first member 4 or by bringing at least one of them into contact with a hot plate.

As shown in Fig. 3, bonded portion 52 is obtained by bonding frame body 3 and first member 4 to each other with an adhesive. In other words, bonded portion 52 can be formed by the adhesive. Therefore, unlike fused portion 51, bonded portion 52 can form joint portion 5 without frame body 3 and first member 4 being molten. A type of the adhesive is not particularly limited so long as the adhesive is excellent in resistance against the electrolyte. Fig. 3 shows the thickness of bonded portion 52 as being increased for the sake of convenience of description. As bonded portion 52 is smaller in thickness, cell frame structure 1 smaller in thickness is constructed.

As shown in Fig. 4, mechanically coupled portion 53 is obtained by mechanically coupling frame body 3 and first member 4 to each other. Therefore, unlike fused portion 51, mechanically coupled portion 53 can form joint portion 5 without frame body 3 and first member 4 being molten. Mechanically coupled portion 53 can be formed, for example, by a screw, a rivet, combination between a bolt and a nut, or snap fitting. A constituent material for the screw, the rivet, the bolt, and the nut is not particularly limited so long as it is composed of a material excellent in resistance against the electrolyte. The constituent material for the screw, the rivet, the bolt, and the nut may be composed, for example, of resin the same as that for frame body 3. Snap fitting is formed from a part of frame body 3 or first member 4. Fig. 4 shows an example where the screw forms coupled portion 53.

A location where joint portion 5 is formed is not particularly limited so long as it is a location where position displacement of frame body 3 and first member 4 is less likely in making of cell stack 200. As shown in Fig. 1, joint portion 5 in the present embodiment is provided in a surrounding shape along the entire periphery of first member 4. Specifically, joint portion 5 is provided in a shape of a surrounding rectangle along the entire periphery of first member 4 to surround a periphery on an outer side of each manifold 35 and each groove portion 36. From another point of view, joint portion 5 in the surrounding shape is arranged between inner peripheral portion 3i of frame body 3 and outer peripheral portion 3e of frame body 3. Joint portion 5 in the surrounding shape is arranged at a position closer to outer peripheral portion 3e of frame body 3 than groove portion 36 in frame body 3. Joint portion 5 provided in the surrounding shape or in the surrounding rectangular shape can perform a sealing function to suppress leakage of the electrolyte from between frame body 3 and first member 4. Fig. 6 shows a sealing member 8 arranged between frame bodies 3. Sealing member 8 is in the surrounding shape. In the example where joint portion 5 is provided in the surrounding rectangular shape as in the present embodiment, sealing member 8 does not have to be provided.

### [Redox Flow Battery System]

Redox flow battery system 100 in the first embodiment will be described with reference to Fig. 6. Redox flow battery system 100 stores by charging, electric power generated by a power generation unit 310 and supplies stored electric power to a load 330 by discharging. Redox flow battery system 100 is representatively connected to an alternating-current (AC)/direct-current (DC) converter 300. AC/DC converter 300 is connected to a transformer facility 320. Transformer facility 320 is connected to power generation unit 310 and load 330. Exemplary power generation unit 310 is a solar photovoltaic generator, a wind power generator, or other general power plants. Exemplary load 330 is a consumer of electric power. An arrow shown with a solid line that extends from transformer facility 320 toward AC/DC converter 300 means charging. An arrow shown with a dashed line that extends from AC/DC converter 300 toward transformer facility 320 means discharging. Redox flow battery system 100 uses the positive electrolyte and the negative electrolyte. The positive electrolyte and the negative electrolyte contain as an active material, ions varied in valence by oxidation and reduction. Charging and discharging of redox flow battery system 100 is performed by making use of a difference between an oxidation-reduction potential of ions contained in the positive electrolyte and an oxidation-reduction potential of ions contained in the negative electrolyte. Exemplary applications of redox flow battery system 100 include load leveling, momentary compensation, an emergency power supply, or smoothening of output of natural energy. Natural energy is, for example, solar photovoltaic generation or wind power generation.

### [Battery Cell]

Redox flow battery system 100 includes battery cell 7. Battery cell 7 is separated by membrane 7M into a positive electrode cell and a negative electrode cell. The positive electrode cell contains positive electrode 7P. A positive electrolyte circulation mechanism 9P feeds the positive electrolyte from a positive electrolyte tank 91 to the positive electrode cell. The negative electrode cell contains negative electrode 7N. A negative electrolyte circulation mechanism 9N feeds the negative electrolyte from a negative electrolyte tank 92 to the negative electrode cell. Membrane 7M is arranged between positive electrode 7P and negative electrode 7N. Battery cell 7 can be in a known construction. Battery cell 7 is normally formed in the inside of a structure called cell stack 200.

### [Cell Stack]

Cell stack 200 includes a plurality of sub stacks, two end plates 220, and a fastening mechanism 230. Each sub stack includes a layered body and two supply/drainage plates. The layered body is constructed by layering the assembly described above and membrane 7M in this order a plurality of times. The assembly is made as below. Positive electrode 7P is arranged in first recess 61 in the integrated article of bipolar plate 2 and frame body 3. Frame body 3 and first member 4 are joined to each other by overlaying first member 4 on a prescribed position in frame body 3 and positive electrode 7P. Negative electrode 7N is arranged in second recess 62. Frame body 3 and first member 4 are joined to each other by overlaying first member 4 on a prescribed position in frame body 3 and negative electrode 7N. Positive electrode 7P may be arranged in first recess 61 and negative electrode 7N may be arranged in second recess 62 after frame body 3 and first member 4 are joined to each other. The supply/drainage plates are arranged on respective opposing ends of the layered body. A supply pipe 93 and a discharge pipe 95 of positive electrolyte circulation mechanism 9P and a supply pipe 94 and a discharge pipe 96 of negative electrolyte circulation mechanism 9N are connected to the supply/drainage plates. Two end plates 220 sandwich the plurality of sub stacks from the outside of the sub stacks at the opposing ends. Fastening mechanism 230 fastens both of end plates 220.

Membrane 7M is an ion exchange membrane through which electrons do no pass but, for example, hydrogen ions pass. Membrane 7M may have a thickness, for example, not larger than 60 µm. Membrane 7M having the thickness not larger than 60 µm may be damaged when it comes in contact with edge portion 38. In the present embodiment, as frame body 3 and first member 4 are fixed by joint portion 5, position displacement of first member 4 is suppressed. First member 4 covers edge portion 38. Therefore, contact between membrane 7M and edge portion 38 is suppressed. Since contact between membrane 7M and edge portion 38 is thus less likely, damage to membrane 7M due to contact does not occur even when membrane 7M has the thickness not larger than 60 µm. Membrane 7M may further have the thickness not larger than 40 µm or particularly not larger than 30 µm. Membrane 7M may have the thickness, for example, not smaller than 5 µm. Membrane 7M having the thickness not smaller than 5 µm is less likely to be damaged. Membrane 7M may further have the thickness not smaller than 8 µm or particularly not smaller than 10 µm. In other words, membrane 7M may have the thickness not smaller than 5 µm and not larger than 60 µm, furthermore not smaller than 8 µm and not larger than 40 µm, or particularly not smaller than 10 µm and not larger than 30 µm. The thickness of membrane 7M is defined as an average value of the thicknesses at at least five locations.

### [Positive Electrolyte Circulation Mechanism and Negative Electrolyte Circulation Mechanism]

Positive electrolyte circulation mechanism 9P includes positive electrolyte tank 91, supply pipe 93, discharge pipe 95, and a pump 97. The positive electrolyte is stored in positive electrolyte tank 91. The positive electrolyte flows through supply pipe 93 and discharge pipe 95. Supply pipe 93 connects positive electrolyte tank 91 and the positive electrode cell to each other. Discharge pipe 95 connects the positive electrode cell and positive electrolyte tank 91 to each other. Pump 97 delivers the positive electrolyte in positive electrolyte tank 91. Pump 97 is provided at some midpoint in supply pipe 93.

Negative electrolyte circulation mechanism 9N includes negative electrolyte tank 92, supply pipe 94, discharge pipe 96, and a pump 98. The negative electrolyte is stored in negative electrolyte tank 92. The negative electrolyte flows through supply pipe 94 and discharge pipe 96. Supply pipe 94 connects negative electrolyte tank 92 and the negative electrode cell to each other. Discharge pipe 96 connects the negative electrode cell and negative electrolyte tank 92 to each other. Pump 98 delivers the negative electrolyte in negative electrolyte tank 92. Pump 98 is provided at some midpoint in supply pipe 94.

### [Electrolyte]

A positive active material contained in the positive electrolyte is, for example, at least one selected from the group consisting of manganese ions, vanadium ions, iron ions, polyacid, a quinone derivative, and amine. A negative active material contained in the negative electrolyte is, for example, at least one selected from the group consisting of titanium ions, vanadium ions, chromium ions, polyacid, a quinone derivative, and amine. In a specific example, both of the positive electrolyte and the negative electrolyte contain vanadium ions. A solvent for the positive electrolyte and the negative electrolyte is, for example, an aqueous solution containing acid or acid salt of at least one selected from the group consisting of sulfuric acid, phosphoric acid, nitric acid, and hydrochloric acid.

### [Second Embodiment]

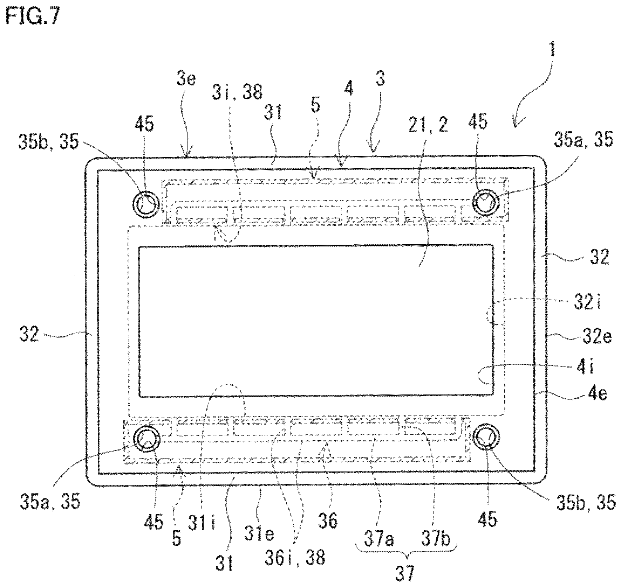

Cell frame structure 1 in a second embodiment will be described with reference to Fig. 7. Cell frame structure 1 in the present embodiment is different from cell frame structure 1 in the first embodiment in location where joint portion 5 is formed. Description below will be given, with a difference from the first embodiment being focused on. Description of the construction and the effect the same as in the first embodiment may not be provided.

Joint portion 5 is provided in a shape of a rectangular frame as surrounding first manifold 35a and groove portion 36 in each long-side portion 31. From another point of view, joint portion 5 is arranged in long-side portion 31 between inner peripheral portion 3i of frame body 3 and outer peripheral portion 3e of frame body 3. Joint portion 5 includes a portion provided at a position closer to outer peripheral portion 3e of frame body 3 than groove portion 36 in frame body 3 and a portion provided at a position closer to inner peripheral portion 3i of frame body 3 than groove portion 36 in frame body 3. Joint portion 5 is not provided at a location where first member 4 and second guide groove portion 37b are superimposed on each other. Joint portion 5 is not provided either at a location where each short-side portion 32 and first member 4 are superimposed on each other.

### [Third Embodiment]

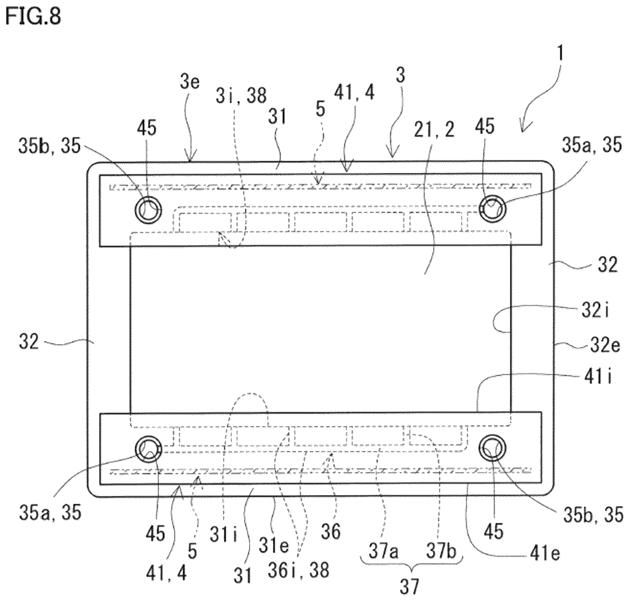

Cell frame structure 1 in a third embodiment will be described with reference to Fig. 8. Cell frame structure 1 in the present embodiment is different from cell frame structure 1 in the first embodiment in construction of first member 4 and location where joint portion 5 is formed. Description below will be given, with a difference from the first embodiment being focused on. Description of the construction and the effect the same as in the first embodiment may not be provided.

First member 4 includes a plurality of first pieces 41. Each first piece 41 is a plate piece. Each first piece 41 is in a rectangular shape in the plan view. A length of each long side of first piece 41 is longer than the length of the long side of inner peripheral portion 3i and shorter than the length of the long side of outer peripheral portion 3e. Each first piece 41 is overlaid on each long-side portion 31. Each first piece 41 covers the entirety of inner edge portion 31i and groove portion 36 of each long-side portion 31. An inner edge portion 41i of each first piece 41 is located on the inner side of frame body 3 relative to inner edge portion 31i of each long-side portion 31. An outer edge portion 41e of each first piece 41 is located on the inner side of outer edge portion 31e of long-side portion 31.

Joint portion 5 fixes each long-side portion 31 and each first piece 41. Each joint portion 5 is provided at a position closer to outer edge portion 31e of each long-side portion 31 than first manifold 35a, second manifold 35b, and groove portion 36, in each long-side portion 31. Each joint portion 5 is provided in parallel to each first guide groove portion 37a. From another point of view, joint portion 5 is provided between groove portion 36 and outer edge portion 31e of long-side portion 31. Guide groove portion 37a in groove portion 36 and joint portion 5 extend along long-side portion 31, from first short-side portion 32 of two short side portions 32 toward second short-side portion 32. Joint portion 5 is provided as far as a position closer to first short-side portion 32 and a position closer to second short-side portion 32 than groove portion 36. Though not shown, unlike the present embodiment, joint portion 5 may further include portions that extend from opposing ends of a linear portion in parallel to each first guide groove portion 37a toward short-side portions 32.

### [Fourth Embodiment]

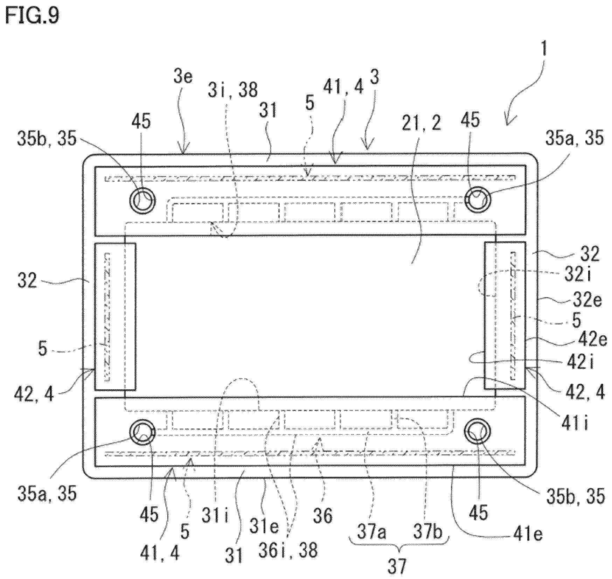

Cell frame structure 1 in a fourth embodiment will be described with reference to Fig. 9. Cell frame structure 1 in the present embodiment is different from cell frame structure 1 in the third embodiment in construction of first member 4 and location where joint portion 5 is formed. Description below will be given, with a difference from the third embodiment being focused on. Description of the construction and the effect the same as in the third embodiment may not be provided.

First member 4 includes a plurality of first pieces 41 and a plurality of second pieces 42. Each first piece 41 is the same as in the third embodiment. Each second piece 42 is a plate piece. Each second piece 42 is in a rectangular shape in the plan view. A length of each long side of second piece 42 is shorter than the length of the short side of inner peripheral portion 3i. Each second piece 42 is overlaid on each short-side portion 32. Each second piece 42 covers an inner edge portion 32i of each short-side portion 32. An inner edge portion 42i of each second piece 42 is located on the inner side of frame body 3 relative to inner edge portion 32i of each short-side portion 32. An outer edge portion 42e of each second piece 42 is located on the inner side of an outer edge portion 32e of each short-side portion 32.

Joint portion 5 fixes each long-side portion 31 and each first piece 41 and fixes each short-side portion 32 and each second piece 42. Each joint portion 5 that fixes each long-side portion 31 and each first piece 41 is the same as in the third embodiment. Each joint portion 5 that fixes each short-side portion 32 and each second piece 42 is provided along the long side of each second piece 42.

The present invention is not limited to these illustrations but is defined by the terms of the claims and is intended to include any modifications within the scope and meaning equivalent to the terms of the claims.

For example, the joint portion may be provided along the groove portion, near the groove portion. Joint portion 5 in an example where groove portion 36 includes first guide groove portion 37a and second guide groove portion 37b as shown in Fig. 1 may be provided as below. Joint portion 5 may be provided along the long side of outer peripheral portion 3e, near first guide groove portion 37a. Joint portion 5 may be provided along the short side of outer peripheral portion 3e, near second guide groove portion 37b.

In each embodiment described above, first member 4 is fixed to the surface of frame body 3 with joint portion 5. Unlike these constructions, for example, a recess may be provided in the surface of frame body 3 and first member 4 may be fitted in the recess. The recess is provided in an area in frame body 3 superimposed on first member 4. By setting a depth of the recess to substantially be equal to the thickness of first member 4, a surface of frame body 3 not covered with first member 4 can be flush with the surface of first member 4. In this case, for example, a bottom surface of the recess and first member 4 are fixed by joint portion 5.

Joint portion 5 may be combination of two or three selected from fusion (welded portion 51), bonding (bonded portion 52), and the mechanically coupled portion (coupled portion 53). For example, in a form shown in Fig. 9, joint portion 5 provided in first piece 41 may be implemented by bonded portion 51 and joint portion 5 provided in second piece 42 may be implemented by coupled portion 53.

### REFERENCE SIGNS LIST

1 cell frame structure; 2 bipolar plate; 21 first surface; 22 second surface; 3 frame body; 3i inner peripheral portion; 3e outer peripheral portion; 31 long-side portion; 31i inner edge portion; 31e outer edge portion; 32 short-side portion; 32i inner edge portion; 32e outer edge portion; 33 first surface; 34 second surface; 35 manifold; 35a first manifold; 35b second manifold; 36 groove portion; 36i opening edge portion; 37 guide groove portion; 37a first guide groove portion; 37b second guide groove portion; 38 edge portion; 4 first member; 4i inner peripheral portion; 4e outer peripheral portion; 41 first piece; 41i inner edge portion; 41e outer edge portion; 42 second piece; 42i inner edge portion; 42e outer edge portion; 45 through hole; 5 joint portion; 51 fused portion; 52 bonded portion; 53 coupled portion; 61 first recess; 62 second recess; 100 redox flow battery system; 7 battery cell; 7M membrane; 7P positive electrode; 7N negative electrode; 8 sealing member; 9P positive electrolyte circulation mechanism; 9N negative electrolyte circulation mechanism; 91 positive electrolyte tank; 92 negative electrolyte tank; 93, 94 supply pipe; 95, 96 discharge pipe; 97, 98 pump; 200 cell stack; 220 end plate; 230 fastening mechanism; 300 AC/DC converter; 310 power generation unit; 320 transformer facility; 330 load.

## Claims

1. A cell frame structure comprising:
a bipolar plate;
a frame body provided around an outer periphery of the bipolar plate; and
a first member overlaid on the frame body, wherein
the frame body and the first member are fixed by a joint portion.

2. The cell frame structure according to claim 1, wherein
the joint portion includes a fused portion of the frame body and the first member.

3. The cell frame structure according to claim 1 or 2, wherein
the joint portion includes a bonded portion of the frame body and the first member.

4. The cell frame structure according to any one of claims 1 to 3, wherein
the joint portion includes a mechanically coupled portion of the frame body and the first member.

5. The cell frame structure according to any one of claims 1 to 4, wherein
the first member has a surrounding shape in a plan view, and
the first member covers an inner peripheral portion of the frame body over an entire periphery.

6. The cell frame structure according to claim 5, wherein
the joint portion is provided in a surrounding manner along the entire periphery of the first member.

7. The cell frame structure according to any one of claims 1 to 4, wherein
the frame body is in a shape of a rectangular frame,
the frame body includes long-side portions opposed to each other and short-side portions opposed to each other,
each long-side portion of the long-side portions includes
a manifold that passes through the long-side portion, and
a groove portion that connects the manifold and an inner edge portion of the long-side portion to each other, and
the first member includes a first piece that covers an opening edge portion of the groove portion in each of the long-side portions.

8. The cell frame structure according to claim 7, wherein
the first member further includes a second piece that covers an inner edge portion of each of the short-side portions.

9. The cell frame structure according to any one of claims 1 to 6, wherein
the frame body is in a shape of a rectangular frame,
the frame body includes long-side portions opposed to each other and short-side portions opposed to each other,
each long-side portion of the long-side portions includes
a manifold that passes through the long-side portion, and
a groove portion that connects the manifold and an inner edge portion of the long-side portion to each other, and
the joint portion is provided to surround the groove portion in each of the long-side portions.

10. The cell frame structure according to claim 7 or 8, wherein
the joint portion is provided between the groove portion and an outer edge portion of the long-side portion,
the groove portion and the joint portion extend along the long-side portions from a first one of the short-side portions toward a second one of the short-side portions, and
the joint portion is provided to a position closer to the first one of the short-side portions than the groove portion and provided to a position closer to the second one of the short-side portions than the groove portion.

11. The cell frame structure according to any one of claims 1 to 10, wherein
a thickness of the first member is at least 1/20 time and at most 1/5 time as large as a thickness of the frame body.

12. The cell frame structure according to any one of claims 1 to 11, wherein
a strength of joint between the frame body and the first member is not lower than 0.2 MPa.

13. The cell frame structure according to any one of claims 1 to 12, wherein
a constituent material for the frame body and the first member is resin.

14. The cell frame structure according to any one of claims 1 to 13, wherein
a constituent material for the frame body and the first member is one selected from the group consisting of vinyl chloride resin, polypropylene resin, polyethylene resin, fluorine resin, epoxy resin, acrylonitrile-butadiene-styrene resin, vinylidene chloride resin, polyamide resin, polyester resin, polystyrene resin, acrylic resin, polyvinyl alcohol resin, diacetate resin, triacetate resin, and polycarbonate resin.

15. The cell frame structure according to any one of claims 1 to 14, wherein
a difference between a solubility parameter of a constituent material for the frame body and a solubility parameter of a constituent material for the first member is not larger than fifteen.

16. A cell stack comprising the cell frame structure according to any one of claims 1 to 15.

17. A redox flow battery system comprising the cell stack according to claim 16.
